# EUROPÄISCHE PATENTSCHRIFT

(11) **EP 1 956 452 B1**
(45) Veröffentlichungstag und Bekanntmachung des Hinweises auf die Patenterteilung: **17.04.2013**
(21) Anmeldenummer: 08001596.9
(22) Anmeldetag: 29.01.2008
(51) Int. Cl.: G05B 19/19, G05B 19/416

(54) **Verfahren zum Betreiben von gesteuerten Maschinen**
Method for operating controlled machines
Procédé destiné au fonctionnement de machines commandées

(30) Priorität: 05.02.2007 DE 102007006421
(43) Veröffentlichungstag der Anmeldung: 13.08.2008
(73) Patentinhaber: ROBERT BOSCH GMBH, 70469 Stuttgart (DE)
(72) Erfinder: Korajda, Bartosz, 97816 Lohr-Sendelbach (DE); Krauskopf, Sebastian, 97737 Gemünden (DE)
(74) Vertreter: Bittner, Bernhard

(56) Entgegenhaltungen:
- EP-A- 1 148 398
- EP-A- 1 220 069
- TOL-O-MATIC Inc.: "SSC 1-4 Multi-Axis / Multi-Function Servo / Stepper Controller User's Manual", Internet, 1 January 1998 (1998-01-01), Retrieved from the Internet: URL:http://mail.tolomatic.com/archives/pdf s/3600-4608A_SSCPart1.pdf [retrieved on 2012-08-16]

## Beschreibung

Die vorliegende Erfindung bezieht sich auf ein Verfahren zum Betreiben von insbesondere elektronisch gesteuerten Maschinen sowie einer Steuerungseinrichtung zum Betreiben von gesteuerten Maschinen. Das erfindungsgemäße Verfahren und die erfindungsgemäße Vorrichtung werden unter Bezugnahme auf Verpackungsmaschinen, Textilmaschinen und dergleichen beschrieben. Es wird jedoch darauf hingewiesen, dass das Verfahren und die Vorrichtung auch für andere Arten von Maschinen wie Druckmaschinen oder Automatisierungsanlagen, einsetzbar sind. Daneben ist die Erfindung auch für elektrisch, hydraulisch oder pneumatisch gesteuerte Maschinen geeignet.

Derartige Verfahren zum Betreiben von Maschinen sind aus dem Stand der Technik seit langem bekannt. Solche Steuerungen ermöglichen beispielsweise eine Bewegungsführung von bewegbaren Maschinenelementen dieser Maschinen. Dabei werden diese Maschinenelemente unter Verwendung eines für die Bewegung spezifischen Bewegungsprofils gesteuert. Im Stand der Technik ist es bekannt, entsprechende Bewegungsprofile bzw. Kurvenscheiben als starre Bewegungsbahn, die zyklisch durchlaufen wird, zu beschreiben. So liegt beispielsweise die DIN 21 43 (in der die Kurvenscheibe als starre Bewegungsbahn, die zyklisch durchläuft, beschreiben wird) derartigen Steuerungen zugrunde.

Bei den Verfahren aus dem Stand der Technik ist jedoch der Ablauf der Kurvenscheibe lediglich zyklisch und fest von Anfang bis Ende definiert. Eine Änderung der Bewegungsbahn ist daher nur durch manuelles Umschalten zu einer anderen Kurvenscheibe möglich.

Die EP 1 220 069 B1 beschreibt ein Verfahren zur Erstellung flexibler Kurvenscheibenfunktionen über ein Steuerungs- oder Anwendungsprogramm. Dabei wird eine Kurvenscheibenfunktion, welche eine Bewegung eines Maschinenelementes beschreibt, abschnittweise beschrieben, wobei aufeinanderfolgende Bewegungsabschnitte durch Segmente bzw. Punkte definiert werden und zwischen solchen Bewegungsabschnitten nach einer vorgebbaren Interpolationsvorschrift interpoliert wird. Daneben sind Befehle zur Vorgabe und zum Einfügen von Punkten, Segmenten und Interpolationsvorschriften zur Laufzeit vorgesehen, wobei die Kurvenscheibenfunktion über Befehle im Laufzeitsystem einer Maschinensteuerung erstellt wird. Gleichwohl wird in der EP 1 220 069 B1 ein zyklisch bzw. starrer Bewegungsablauf erzeugt und insbesondere sind keine Sprünge in einzelnen Bewegungsschritten des Bewegungsablaufs möglich. Auch sind die einzelnen Bewegungsbahnen nur eingeschränkt veränderbar.

EP 1 148 398 A2 offenbart ein Eingabeverfahren für die Programmierung industrieller Steuerungen, wobei ein Bewegungsprofil absnittsweise und mit Ereignissen wird.

Der vorliegenden Erfindung liegt die Aufgabe zugrunde, ein Verfahren zum Betreiben von gesteuerten Maschinen zur Verfügung zu stellen, welches einerseits eine flexible Reaktion auf externe Betriebsbedingungen oder auch auf Vorgaben des Benutzers ermöglicht und auf der anderen Seite in Reaktion auf derartige Einflüsse eine Änderung des Bewegungsbahnablaufs erlaubt. Daneben sollen die Möglichkeiten für den Nutzer zur Änderung der Bewegungsbahn verbessert werden. Genauer gesagt soll eine ereignisgesteuerte Kurvenscheibe bzw. ein ereignisgesteuertes Bewegungsprofil mit frei definierbaren Bedingungen konzipiert und somit die Bewegungsführung verbessert werden.

Dies wird erfindungsgemäß durch ein Verfahren nach Anspruch 1 und eine Steuerungsvorrichtung nach Anspruch 9 erreicht. Vorteilhafte Ausführungsformen und Weiterbildungen sind Gegenstand der Unteransprüche.

Bei dem erfindungsgemäßen Verfahren zum Betreiben von gesteuerten Maschinen wird eine Bewegung wenigstens eines bewegbaren Maschinenelements der Maschine unter Verwendung eines für diese Bewegung spezifischen Bewegungsprofils gesteuert und dieses Bewegungsprofil der Bewegung des Maschinenelements wird in mehrere Profilsegmente unterteilt. Erfindungsgemäß wird wenigstens einem, bevorzugt mehreren und besonders bevorzugt jedem der Profilsegmente wenigstens eine Bewegungsbedingung zugeordnet, welche dieses Profilssegment beeinflusst. Jede Bewegungsbedingung weist wenigstens ein auslösendes Ereignis und wenigstens ein diesem auslösenden Ereignis zugeordnetes und von dem auslösenden Ereignis auslösbares Aktionsereignis auf, wobei das Aktionsereignis das Profilsegment beeinflusst.

Unter einer Bewegungsbedingung wird damit eine Zusammenstellung aus wenigstens einem auslösenden Ereignis und einem diesen auslösenden Ereignis zugeordneten Aktionsereignis verstanden. Bevorzugt ist jedem auslösenden Ereignis genau ein Aktionsereignis zugeordnet. Umgekehrt können einem Aktionsereignis mehrere auslösende Ereignisse zugeordnet sein. Unter Profilsegmenten werden Ausschnitte des gesamten Bewegungsprofils verstanden. Bevorzugt sind die einzelnen Profilsegmente hintereinander angeordnet und ergeben' in Ihrer Gesamtheit wiederum das gesamte Bewegungsprofil der Bewegung des Maschinenelements. Auch können Bedingungen dem gesamten Bewegungsprofil bzw. mehreren Profilsegmenten zugeordnet sein.

Durch das Vorsehen von Bewegungsbedingungen für die einzelnen Profilsegmente ist eine direkte Einflussnahme auf das Segment möglich und auch sind Sprünge von einem bestimmten Profilsegment zu einem anderen Profilsegment möglich. So kann beispielsweise bei Vorliegen eines bestimmten auslösenden Ereignisses von einem dritten Profilsegment auf ein siebtes Profilsegment gesprungen werden.

Vorteilhaft werden die oben genannten Bedingungen zum Ausführungszeitpunkt überwacht und in Echtzeit abgewickelt. Auch die jeweiligen Bahnänderungen bzw. die Änderungen des Bewegungsprofils, die durch die Bedingungen ausgelöst werden, werden in Echtzeit neu berechnet. Auf diese Weise wird eine echtzeitfähige und ereignisgesteuerte Bewegungsführung erreicht und eine schnelle und flexible Anpassung von Bewegungsprofilen an externe Ereignisse möglich. Auch sind, wie erwähnt, Sprünge zwischen den Segmenten innerhalb eines Bewegungsprofils möglich, was zu einer hohen Bahnberechnungsflexibilität und einer hohen Benutzungsfreundlichkeit im Sinne einer intuitiven Bedienung führt. Daneben ist auch eine schnelle Reaktion auf Prozessereignisse möglich.

Vorzugsweise wird durch ein auslösendes Ereignis eine Änderung wenigstens eines Profilsegments bewirkt. Es kann jedoch auch durch ein auslösendes Ereignis Einfluss auf mehrere Profilsegmente genommen werden. Auslösende Ereignisse können verschiedene Zustände oder Führungsgrößen sein.

Die Änderung dieses Profilsegments wird vorzugsweise in Echtzeit berechnet, was die Flexibilität des Verfahrens erhöht.

Vorteilhaft wird die Berechnung der Änderung eines Profilssegments bzw. des Bewegungsprofils durch vorgegebene Bewegungsgesetze und besonders bevorzugt in Echtzeit durchgeführt. Bewegungsgesetze definieren die Gesetzmäßigkeit beispielsweise zw. An -und Abtriebsfunktionen und allgemein für die Darstellung von Bewegungsprofilen und legen so den Verlauf der Bahn fest. Ein Bewegungsgesetz wird im Allgemeinen über die Parameter Hub, Leitgeberabschnitt bzw. mathematisch gesprochen den Abschnitt auf einer x-Achse für eine Funktion f(x), über Randwerte des betreffenden Segments und Wendepunktverschiebungen eindeutig definiert. Die Randwerte können jeweils durch ihre Parameter Geschwindigkeit, Beschleunigung und Ruck dargestellt werden, wobei Ruck die Ableitung der Beschleunigung nach der Zeit ist.

Als (normierte) Übertragungsfunktion kommen beispielsweise Polynome n-ten Grades, insbesondere fünften oder siebten Grades, lineare Rast, modifizierte Beschleunigungstrapeze und dergleichen in Betracht. Im Rahmen dieser Beschreibung wird Hub als Funktion des Leitgeberabschnitts definiert.

Daneben kann auch über eine Auswahl verschiedener (normierter) Bewegungsgesetze eine Vielzahl von Bewegungsbahnen definiert werden. So kann beispielsweise für die Situation, dass am Anfang eines Segments das betreffende Element in Ruhe ist und auch am Ende des Segments das betreffende Elemente in Ruhe ist (Rast), der dazwischenliegende Abschnitt beschrieben werden durch lineare Rast (eine Strecke bzw. Gerade), eine einfache Sinoide (d. h. eine einfache Sinuslinie), eine geneigte Sinoide (wie eine Sinoide von Bestehorn), eine um eine Beschleunigungsoptimale geneigte Sinuslinie, eine um eine Momentoptimale geneigte Sinuslinie, eine Sinoide von Gutman, eine modifizierte Sinoide, ein modifiziertes Beschleunigungstrapez oder auch ein Polynom fünften oder siebten Grades. Weitere Bewegungsgesetze sind möglich.

Falls ein Übergang von einer ersten Geschwindigkeit auf eine zweite Geschwindigkeit erfolgen soll, ist dies beispielsweise durch eine lineare Interpolation, durch Polynome fünften oder siebten Grades, modifizierte Sinoiden durch ein beschleunigungsbegrenztes Trapez oder dergleichen möglich.

Als weitere Bewegungsgesetze für die Echtzeitberechnung der Bahn können Bewegungsgesetze wie Splines, Punktetabellen, frei wählbare Funktionen und dergleichen durchgeführt werden. Über die auslösenden Ereignisse können verschiedene Zustände der verschiedenen Führungsgrößen und des aktuellen Bewegungsschrittes abgefragt und verknüpft werden.

Vorzugsweise liegt dem Bewegungsprofil wenigstens eine Basisfunktion zugrunde. Diese Funktion beschreibt den ungestörten Zustand bzw. einen Zustand ohne externe Ereignisse. Auch dieses Bewegungsprofil kann bevorzugt abschnittsweise definiert werden. Auch diese Basisfunktion kann aus den obigen Funktionsgattungen ausgewählt werden. Die vorliegende Erfindung erlaubt schnelle Reaktionen auf geänderte Zustände, die auf die Basisfunktion einwirken. So kann beispielsweise das gesamte Bewegungsprofil durch ein Polynom fünften Grades beschrieben werden. Bei Auftreten eines externen Ereignisses kann beispielsweise bewirkt werden, dass ein Segment dieses Bewegungsprofils verändert wird oder dass eine Bewegung innerhalb eines bestimmten Segments abgebrochen wird und in einem weiteren Segment fortgeführt wird. Weiterhin werden bevorzugt einzelne Profilsegmente zu Segmentgruppen zusammengefasst, insbesondere wenn auf die zusammengefassten Segmente die gleichen Bedingungen anwendbar sind.

Vorteilhaft ist das auslösende Ereignis bzw. Kriterium aus einer Gruppe von Kriterien ausgewählt, welche eine Position (des Maschinenelements) relativ zum Beginn eines Bewegungsschrittes, eine Position (des Maschinensegments) relativ zum Beginn des Bewegungsprofils, ein Eingangssignal aus einer SPS, ein Eingangssignal eines externen Eingangs, eine Ausführungsdauer, das Ergebnis einer anderen Bedingung, eine Rezeptureinstellung, Kombinationen hieraus oder dergleichen enthält. Ein bestimmter Bewegungsschritt wird dabei durch ein bestimmtes Profilsegment beschrieben.

Damit ist beispielsweise gemeint, dass eine bestimmte absolute Position des Maschinenelements ein auslösendes Ereignis sein kann, welches wiederum ein Aktionsereignis auslöst. Falls beispielsweise das Maschinenelement bei einem Bewegungsschritt bei einer bestimmten Position liegt, kann durch Feststellen dieser Position der Befehl ausgegeben werden, das Maschinenelement zu verschieben. Die Ausführungsdauer ist dabei auf die Ausführung für einen einzelnen Schritt des Bewegungsprofils oder auch für das gesamte Bewegungsprofil bezogen. Eine zu lange oder zu kurze Ausführungsdauer gegenüber einem Sollwert kann eine bestimmte Aktion auslösen. Auch können einzelne Bedingungen miteinander verknüpft sein und beispielsweise das Ergebnis einer anderen Bedingung d. h. insbesondere ein ausgeführtes Reaktionsereignis wiederum Grundlage für ein auslösendes Ereignis sein. Ein auslösendes Kriterium kann weiterhin eine Rezeptureinstellung sein oder vom Benutzer vorgegebene Bedingungen.

Bevorzugt ist das Reaktionsereignis aus einer Gruppe von Ergebnissen ausgewählt, welche einen Abbruch eines Bewegungsschrittes, einen sofortigen Sprung zu einem anderen Bewegungsschritt, einen Sprung zu einen anderen Bewegungsschritt nach Vollendung des aktuellen Bewegungsschrittes, ein Triggern eines SPS-Ausgangs oder eines externen Ausgangs, die Veränderung von Eigenschaften und Rahmenbedingungen des aktuellen Bewegungsschrittes, Kombination hieraus und dergleichen enthält. Dabei können einzelne Reaktionsereignisse als Reaktion auf entsprechende auslösende Kriterien hervorgerufen werden. Falls beispielsweise ein Auslösungskriterium als vorliegend festegestellt wird, dann wird die diesem auslösenden Kriterium zugeordnete Aktion ausgeführt.

Die vorliegende Erfindung ist weiterhin auf eine Steuerungsvorrichtung zum Betreiben von gesteuerten Maschinen nach Anspruch 9 gerichtet, wobei eine Bewegung wenigstens eines bewegbaren Maschinenelements der Maschine unter Verwendung eines dieser Bewegung spezifischen Bewegungsprofils gesteuert wird. Dabei ist dieses Bewegungsprofil abschnitts- bzw. segementweise definiert. Erfindungsgemäß ist eine Steuerungseinrichtung vorgesehen die bewirkt, dass wenigstens einem der Profilsegmente, in welche das Bewegungsprofil aufgeteilt ist, wenigstens eine Bewegungsbedingung zugeordnet ist, welche dieses Profilsegment beeinflusst, wobei jede Bewegungsbedingung wenigstens ein auslösendes Ereignis und wenigstens ein diesem auslösenden Ereignis zugeordnetes und von dem auslösenden Ereignis ausgelöstbares Aktionsereignis umfasst, wobei dieses Aktionsereignis das Profilsegment beeinflusst. Bevorzugt weist die Steuerungsvorrichtung eine Verifizierungseinrichtung auf, welche verifiziert, ob ein bestimmtes auslösendes Ereingis eingetreten ist. Bevorzugt ist jedem der Profilelemente wenigstens eine Bewegungsbedingung zugeordnet.

Weiterhin ordnet die Steuerungseinrichtung bevorzugt einem bestimmten auslösenden Ereignis ein bestimmtes Aktionsereignis zu. Dabei ist eine Abfrageverknüpfung verschiedener Zustände der verschiedenen Führungsgrößen möglich.

Weitere Vorteile und Ausführungsformen ergeben sich aus den beigefügten Zeichnungen: Darin zeigen:
- Fig. 1: eine Veranschaulichung zu möglichen Änderungen eines Bewegungsprofils;
- Fig. 2: eine Veranschaulichung zur Darstellung von Bewegungsgesetzen;
- Fig. 3: eine Veranschaulichung eines Bewegungsdiagramms;
- Fig. 4: eine Veranschaulichung eines Bewegungsdiagramms mit einer Abbruchbedingung;
- Fig. 5: ein Bewegungsprofil unter Hinzunahme zeitlicher Bedingungen;
- Fig. 6: eine Veranschaulichung zweier weiterer Aktionsereignisse, und
- Fig. 7: eine weitere Veranschaulichung eines Bewegungsprofils.

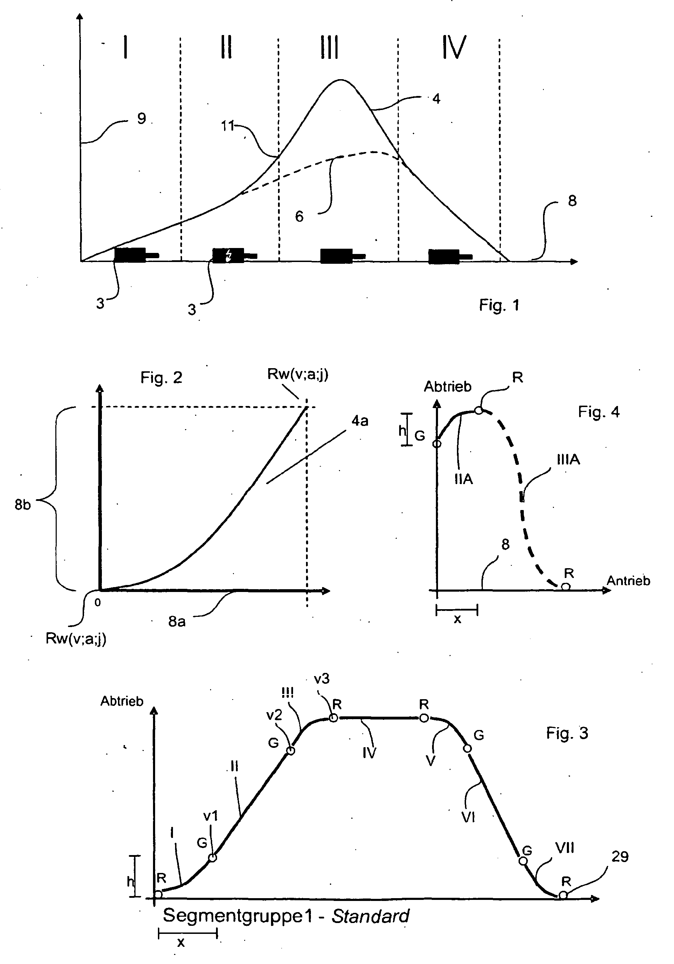

Fig. 1 zeigt ein Bewegungsdiagramm zur Veranschaulichung des erfindungsgemäßen Verfahrens. Dabei bezieht sich das Bezugszeichen 8 auf eine Leitachsposition und das Bezugszeichen 9 auf eine Folgeachsposition. Mathematisch gesprochen handelt es bei der Folgeachsposition um eine Funktion f(x), die durch einen auf der Achse 8 aufgetragenen x-Wert bestimmt wird. Damit beschreibt ein Bewegungsprofil 4 eine Bewegung eines Maschinenelements im Normalzustand. Das Bewegungsprofil 4 ist in vier Abschnitte bzw. Segmente I - IV unterteilt. Das Bezugszeichen 3 symbolisiert eine bestimmte Leitachse. In dem Segment II tritt eine Bedingung auf sowie ein Sprungbefehl (Aktionsereignis). Auf diesen Sprungbefehl hin wird ein neues Bewegungsprofil 6 ermittelt, welches durch die gestrichelte Linie veranschaulicht wird. Dieses weicht in dem zweiten Segment II von dem ursprünglichen Bewegungsprofil 6 ab und trifft in dem Übergang zwischen dem Segment III und dem Segment IV wieder auf das ursprüngliche Bewegungsprofil 4.

Damit könnte die durchgeführte Aktion im folgenden Fall lauten, dass der aktuelle Bewegungsschritt sofort abgebrochen und ein Sprung zu einem anderen Bewegungsschritt, nämlich dem Segment 4 durchgeführt wird. Neben dem Begriff Segment wird im Folgenden auch der Begriff Segmentgruppe verwendet. Hierdurch wird zum Ausdruck gebracht, dass auch mehrere Segmente zu einer Segmentgruppe zusammengefasst werden können.

Dabei wird die neue Bahn bzw. das neue Bewegungsprofil 6 hier derart berechnet, dass keine Sprünge oder mathematisch gesprochen keine Knicke in dem Profil auftreten. Dadurch ist eine ruckfreie Bewegung des entsprechenden Maschinenelements möglich. Es wäre jedoch auch möglich, je nach den Anforderungen für die Maschine andere Bahnen oder Bewegungsprofile zu berechnen. Zur Berechnung dieser Bahn können unterschiedliche, unten im Detail erläuterte, Bewegungsgesetze herangezogen werden.

Auf diese Weise sind, wie gesagt, Sprünge zwischen Segmenten innerhalb eines Bewegungsprofils möglich, wobei auch eine hohe Bahnberechnungsflexibilität gewährleistet ist. So kann schnell und besonders benutzerfreundlich auf Prozessereignisse reagiert werden.

Neben den gezeigten Aktionsereignissen wäre es auch möglich, die Eigenschaften oder Randbedingungen des aktuellen Bewegungsschritts zu verändern, beispielsweise die Folgeachsposition an der durch das Bezugszeichen 11 gekennzeichneten Leitachsposition oder die entsprechenden Leitachsposition 12 selbst. Der Fachmann erkennt, dass eine sehr hohe Anzahl verschiedener Aktionen denkbar ist, die insbesondere auch von den Anforderungen an die Maschinensteuerung oder auch beispielsweise von einem von der Maschine behandelten Gut abhängen können.

Fig. 2 zeigt eine Veranschaulichung für die zur Anwendung kommenden Bewegungsgesetze. Allgemein definieren die Bewegungsgesetze die Gesetzmäßigkeit zwischen einer An- und einer Abtriebsfunktion bzw. zwischen einem Leitgeberabschnitt und einem entsprechenden Folgeachsenabschnitt und legen so den Verlauf der Bahn fest. Ein Bewegungsgesetz wird im Allgemeinen über die Parameter Hub (Folgeachsabschnitt 8b), Leitgeberabschnitt 8a, die Randwerte auf der linken Seite des Abschnitts, die Randwerte (Rw (v, a, j)) auf der rechten Seite des Abschnitts, Wendepunktverschiebungen und entsprechende nomierte Übertragungsfunktionen zwischen den Randwerten bestimmt. Die jeweils beschreibenden Parameter können im vorliegenden Fall die Geschwindigkeiten v, die Beschleunigungen a und die Ruckwerte j in den jeweiligen Randbereichen sein. Unter Ruck wird die Ableitung der Beschleunigung nach der Zeit verstanden. Das Bezugszeichen 4a kennzeichnet einen Abschnitt des Bewegungsprofils 4.

Als normierte Übertragungsfunktionen kommen beispielsweise Polynome fünften Grades, eine lineare Rast (Übergang von v=0 zu v=0) modifizierte Sinoiden modifizierte Beschleunigungstrapeze und vieles mehr in Betracht.

Wie Anfangs erläutert, ist es möglich, ein gesamtes Bewegungsprofil 4 in unterschiedliche Segmente zu unterteilen, wobei für jedes Segment unterschiedliche Übertragungsfunktionen bzw. Bewegungsgesetze verwendet werden können. Über eine Auswahl verschiedener normierter Bewegungsgesetze können eine Vielzahl von Bewegungsprofilen 4 bzw. -bahnen definiert werden.

Neben den dargestellten Übergängen können auch Punktetabellen Interpolationen nullten Grades, lineare Interpolationen oder kubische Spline Interpolationen verwendet werden.

Fig. 3 zeigt ein Bewegungsdiagramm bzw. ein Bewegungsprofil, welches sich aus mehreren, hier insgesamt sieben Abschnitten zusammensetzt. Dabei bedeutet die Abkürzung R jeweils Rast und die Abkürzung G jeweils Geschwindigkeit. Die Abschnitte bzw. Profilsegmente sind mit den Bezugszeichen I- VII gekennzeichnet. In dem ersten Abschnitt findet ein Übergang R→G statt, d. h. ein Übergang von einer Geschwindigkeit v=0 zu einer bestimmten Endgeschwindigkeit v1. Gleichseits wird ein bestimmter Abtrieb bzw. ein Hub Δh zurückgelegt und auf der Leitachse 8 ebenfalls ein gewisses Leitachssegment Δx. Der Abschnitt I wird hier durch eine modifizierte Sinoide beschrieben.

In dem zweiten Abschnitt II wird von der ersten Geschwindigkeit v1 mit konstanter Beschleunigung auf eine zweite Geschwindigkeit v2 beschleunigt so dass hier eine lineare Darstellung möglich ist (Übergang G→G). In dem dritten Abschnitt III geht die Geschwindigkeit v2 in eine Maximalgeschwindigkeit v3 über wobei hier als Bewegungsgesetz wiederum eine modifizierte Sinoide Anwendung findet um Knicke in den Bewegungsprofil zu vermeiden (Übergang G→R). In den Segment IV wird die Geschwindigkeit V3 beibehalten, so dass dieses Segment durch eine lineare Rast beschrieben werden kann (Übergang R→R). Entsprechend tritt hier auch keine Hubveränderung auf, da sowohl die Anfangs- als auch die Endgeschwindigkeit v in diesem Segment IV 0 beträgt. In dem fünften Segment V wird als Bewegungsgesetz wiederum eine modifizierte Sinoide verwendet, in dem rechten Segment VI (G→G) eine lineare Darstellung und in dem siebten Segment VII, um von einer Geschwindigkeit auf Ruhelage zu kommen, wiederum eine modifizierte Sinoide.

Unter Bezugnahme auf Fig. 4 wird erläutert, wie mithilfe einer Bedingung das in Fig. 3 gezeigte Segment II d, h. die lineare Synchronfahrt insbesondere zeitgesteuert abgebrochen werden könnte. Dabei wird darauf hingewiesen, dass im Stand im Stand der Technik auch die Möglichkeit besteht, einzelne Segmente nicht in Abhängigkeit von der Leitachse zu steuern sondern in Abhängigkeit von einer Zeitsteuerung.

In Fig. 4 bezieht sich das Bezugszeichen II A auf einen ersten Abschnitt des in Fig. 3 gezeigten Segments II. In einen ersten Schritt wird eine zweite Segmentgruppe definiert, die durch die spätere Bedingung angesprungen werden soll. Hierbei handelt es sich um die Ruheposition d. h. den in Fig. 3 gezeigten Endpunkt 29. Es können jedoch auch andere Segmentgruppen oder Punkte ausgewählt werden. Damit wird diese zweite Segmentgruppe durch die spätere Bedingung angesprungen und kann so als Abbruchkurve definiert werden.

Um in Fig. 4 von dem Punkt G zu dem oberen Punkt R zu gelangen wird als Bewegungsgesetz ein Polynom fünfter Ordnung angesetzt. Dabei wird ein Hub Δh zurückgelegt und ein Leitgeberabschnitt Δx. Der Übergang von den oberen Punkt R zu dem unteren Punkt R wird ebenfalls am Polynom fünfter Ordnung beschrieben, wobei während dieses Segments hier immer die Folgeachsposition 0° angefahren wird. Als Leitgeber wird hier jeweils die Leitachse 8 verwendet.

Des Weiteren kann zusätzlich ein zeitlicher Operator verwendet werden. Es ist möglich an die in Fig. 4 gezeigte Segmentgruppe II A eine Bedingung anzuhängen, die einen Sprung zu dem Segment I (Fig. 3) bzw. dem Segment III A auslösen soll, sobald beispielsweise eine vorgegebene Zeit, beispielsweise 120 Millisekunden vergangen sind.

Bevorzugt können Zwischensegmente mit einer absoluten Folgeachs-Zielpositionsangabe eingefügt werden, die dafür sorgen, dass am Ende der in Fig. 4 gezeigten Segmentgruppe IIIA die Folgeachse wieder auf der Position 0° steht, unabhängig von der Folgeachsposition bei Beginn dieses Segments. Damit wird bevorzugt innerhalb der Segmentgruppe IIIA immer die Folgeachsposition 0° angefahren. Weiterhin wird bevorzugt als Folgesegment für diese Segmentgruppe 3a bevorzugt wieder die in Fig. 4 nicht gezeigte aber in Fig. 3 dargestellt Segmentgruppe I bzw. das Segment I definiert.

Damit wird sowohl ein auslösendes Ereignis zugrundegelegt, beispielsweise das Erreichen einer relativen Leitgeberposition, als auch zusätzlich ein zeitlicher Operator beispielsweise der Ablauf von 120 Millisekunden auf einem weiteren Leitgeber d. h. ein Zeitpunkt bzw. eine Zeitspanne. Die durchzuführende Aktion besteht darin, das aktuelle Segment sofort abzubrechen wobei hierzu ein bestimmtes Segment, das den Abbruch beschreibt, verwendet wird. Genauer gesagt handelt es sich bei diesem Segment um das Zielsegment welches wieder angefahren werden soll.

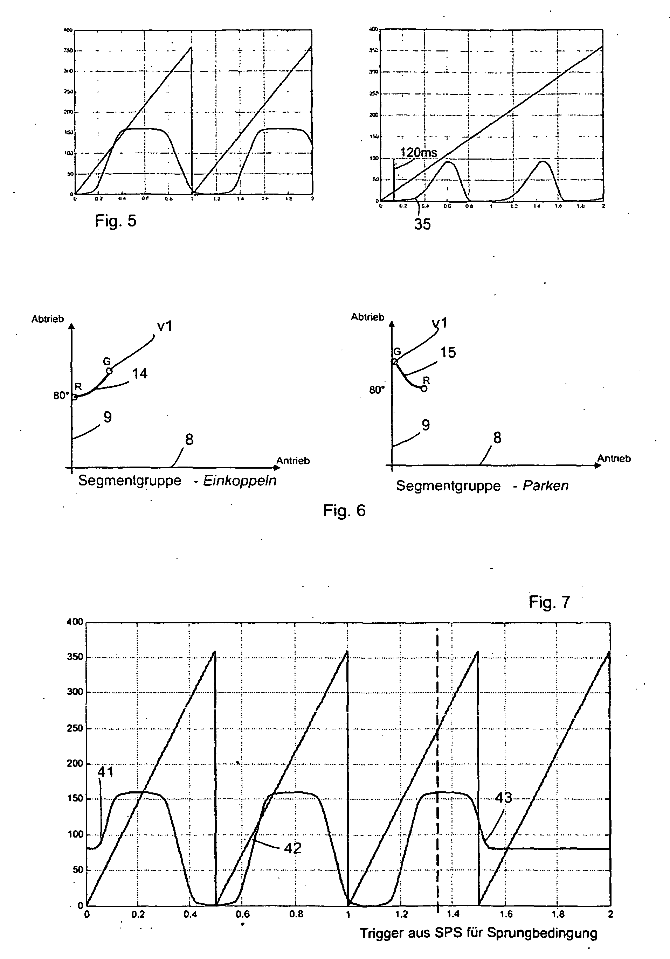

Durch die Hinzunahme zusätzlicher zeitlicher Bedingungen kann beispielsweise eine Unterscheidung nach unterschiedlichen Leitachsengeschwindigkeiten erfolgen. Wenn im obigen Beispiel ein Segment nach 120 Millisekunden abgebrochen wird, trifft diese Bedingung im Fall des in Fig. 5 gezeigten linken Segments nicht zu, so dass hier das Bewegungsprofil unverändert bleibt. Wird jedoch die Geschwindigkeit der Leitachse reduziert, wie im rechten Teilbild von Fig. 5 gezeigt (halbe Geschwindigkeit), so wird das entsprechende Segment nach genau 120 Millisekunden abgebrochen und in die Segmentgruppe 35, welche den Abbruch beschreibt, gesprungen. Damit können auch zeitliche Bedingungen eingefügt werden, beispielsweise die Abfrage, ob ein gewisser Sollzustand nach einer dafür bestimmten Zeit erreicht wurde.

Fig. 6 zeigt ein weiteres Beispiel für eine Sprungbedingung. Dabei zeigt das linke Teilbild eine Segmentgruppe 14 bzw. ein Segment für einen Einkoppelvorgang und das rechte Teilbild eine Segmentgruppe 15 für einen Parkvorgang. Im Falle des linken Teilbilds wird von einer Rastposition R d. h. der Geschwindigkeit v=0 eingekoppelt in eine Endgeschwindigkeit v bei dem Punkt G. Als Bewegungsgesetz wird hier wiederum ein Polynom fünfter Ordnung verwendet, wobei als Leitgeber in beiden Fällen die Leitachse 8 verwendet wird. Im Falle des rechten Teilbilds wird von einer vorgegebenen Geschwindigkeit eine Ruhestellung angefahren und damit eine Parkposition eingenommen. Auch hier ist das Bewegungsgesetz ein Polynom fünfter Ordnung. Die beiden Segmentgruppen, die wie gesagt zum Ein- und Auskoppeln aus dem oben gezeigten Standardprofil verwendet werden sollen, erweitern die insgesamt aufgezeigten Möglichkeiten. Die gezeigte Folgeachsposition 80° kann hier als "Parkposition" angesehen werden.

Weitere Bedingungen können beispielsweise Sprünge aus einem Segment bzw. einer der Segmentgruppe (Standard) zu einer weiteren Segmentgruppe "Abbruch" in Folge eines gesetzten SPS-Eingangs sein. Das auslösende Moment ist also hier beispielsweise eine getriggerte SPS-Variable. Sobald der Operator das Vorliegen dieses Ereignisses feststellt leitet er nach Beendigung des aktuellen Segmentes einen Sprung zu einem weiteren Segment beispielsweise einem neuen Anfahrtssegment, ein.

Fig. 7 veranschaulicht ein weiteres Beispiel für eine Sprungbedingung. Hier wird das Bewegungsprofil mit einer Segmentgruppe 41, die für einen Einkoppelvorgang charakteristisch ist, gestartet und wird anschließend in die Standardsegmentgruppe 42 übergegangen. Zu einen späteren Zeitpunkt wird beispielsweise eine SPS-Auslöser auf wahr gestellt, d. h. ein bestimmtes auslösendes Ereignis tritt ein. In folge dessen wird eine Sprungbedingung ausgelöst und in die Segmentgruppe 43, die für einen Parkvorgang charakteristisch ist, gesprungen. Die Ausführung des Bewegungsprofils endet hier.

### Bezugszeichenliste

- 3: bestimmte Leitachse
- 4: Bewegungsprofil
- 6: Bewegungsprofil
- 8: Leitachsposition
- 9: Folgeachsposition
- 11: bestimmte Folgeachsposition
- 12: bestimmte Leitachsposition
- 14, 15: Segmentgruppen
- 35, 41, 42, 43: Segmentgruppen
- I-IV: Segmente
- IIIa: Segmentgruppe

## Patentansprüche

1. Verfahren zum Betreiben von gesteuerten Maschinen wobei eine Bewegung wenigstens eines bewegbaren Maschinenelements der Maschine unter Verwendung eines für diese Bewegung spezifische Bewegungsprofils (4), welches eine Bewegung des Maschinenelements im Normalzustand beschreibt, gesteuert wird und wobei dieses Bewegungsprofil der Bewegung des Maschinenelements in mehrere Profilsegmente (I, II, III, IV) unterteilt wird,
wobei wenigstens einem Profilsegment (I, II, III, IV) wenigstens eine Bewegungsbedingung zugeordnet wird welche dieses Profilsegment (I, II, III, IV) beeinflusst und wobei jede Bewegungsbedingung wenigstens ein auslösendes Ereignis und wenigstens ein diesem auslösenden Ereignis zugeordnetes und von dem auslösenden Ereignis ausgelöstes Aktionsereignis umfasst wobei das Aktionsereignis das betreffende Profilsegment (I, II, III, IV) beeinflusst,
**dadurch gekennzeichnet, dass**
mittels der wenigstens einen Bewegungsbedingung Sprünge von einem Profilsegment des spezifischen Bewegungsprofils (4) zu einem anderen Profilsegment des spezifischen Bewegungsprofils (4) durchgeführt werden und ein Sprung von diesem Profilsegment zu dem anderen Profilsegment durch einen Sprungbefehl initiiert wird, wobei auf diesen Sprungbefehl hin ein neues Bewegungsprofil ermittelt wird.

2. Verfahren nach Anspruch 1,
**dadurch gekennzeichnet, dass**
die Bewegungsbedingungen in Echtzeit abgewickelt werden.

3. Verfahren nach wenigstens einem der vorangegangenen Ansprüche ,
**dadurch gekennzeichnet, dass**
durch ein auslösendes Ereignis eine Änderung eines Profilsegments (I, II, III, IV) bewirkt wird.

4. Verfahren nach Anspruch 3,
**dadurch gekennzeichnet, dass**
die Änderung des Profilsegments (I, II, III, IV) in Echtzeit berechnet wird.

5. Verfahren nach wenigstens einem der vorangegangenen Ansprüche 3 - 4
**dadurch gekennzeichnet, dass**
die Berechnung der Änderung des Profilsegments mittels vorgegebener Bewegungsgesetze durchgeführt wird.

6. Verfahren nach wenigstens einem der vorangegangenen Ansprüche,
**dadurch gekenzeichnet, dass**
dem Bewegungsprofil (4) wenigstens eine Basisfunktion zugrunde liegt.

7. Verfahren nach wenigstens einem der vorangegangenen Ansprüche,
**dadurch gekennzeichnet, dass**
ein auslösendes Kriterium aus einer Gruppe von Kriterien ausgewählt ist, welche zumindest eine Position des Maschinenelements relativ zum Beginn eines Bewegungsschrittes, eine Position des Maschinenelements relativ zum Beginn des Bewegungsprofils, ein Eingangssignal aus einer SPS, ein Eingangssignal eines externen Eingangs, eine Ausführungsdauer, das Ergebnis einer anderen Bedingung oder Kombinationen hieraus enthält.

8. Verfahren nach wenigstens einem der vorangegangenen Ansprüche,
**dadurch gekennzeichnet, dass**
ein Reaktionsereignis aus einer Gruppe von Ereignissen ausgewählt ist, Welche zumindest einen Abbruch eines Bewegungsschrittes, einen sofortigen Sprung zu einem anderen Bewegungsschritt, einen Sprung zu einem anderen Bewegungsschritt nach Vollendung des aktuellen Bewegungsschrittes, das Triggern eines SPS-Ausgangs oder eines externen Ausgangs, die Veränderung von Eigenschaften und Randbedingungen des aktuellen Bewegungsschrittes oder Kombinationen hieraus enthält.

9. Steuerungsvorrichtung zum Betreiben von gesteuerten Maschinen derart ausgebildet, dass eine Bewegung wenigstens eines bewegbaren Maschinenelements der Maschine unter Verwendung eines für diese Bewegung spezifischen Bewegungsprofils (4), welches eine Bewegung des Maschinenelements im Normalzustand beschreibt, gesteuert wird, und dieses Bewegungsprofil in mehrere Profilsegmente (I, II, III, IV) unterteilt ist,
wobei
eine Steuerungseinrichtung vorgesehen ist, welche bewirkt, dass wenigstens einem der Profilsegmente (I, II, III, IV) wenigstens eine Bewegungsbedingung zugeordnet wird welche dieses Profilsegment (I, II, III, IV) beeinflusst, wobei jede Bewegungsbedingung wenigstens ein auslösendes Ereignis und wenigstens ein diesem auslösenden Ereignis zugeordnetes und von dem auslösenden Ereignis ausgelöstes Aktionsereignis umfasst wobei das Aktionsereignis das Profilsegment beeinflußt,
**dadurch gekennzeichnet, dass**
mittels der wenigstens einen Bewegungsbedingung Sprünge von einem Profilsegment des spezifischen Bewegungsprofils (4) zu einem anderen Profilsegment des spezifischen Bewegungsprofils (4) durchführbar sind, und ein Sprung von diesem Profilsegment zu dem anderen Profilsegment durch einen Sprungbefehl initiiert wird, wobei auf diesen Sprungbefehl hin ein neues Bewegungsprofil ermittelt wird.

10. Steuerungsvorrichtung nach Anspruch 9,
**dadurch gekennzeichnet, dass**
die Steuerungsvorrichtung eine Verifizierungseinrichtung aufweist, welche verifiziert, ob ein bestimmtes auslösendes Ereignis eingetreten ist.

11. Steuerungsvorrichtung nach wenigstens einem der vorangegangenen Ansprüche 9-10.
**dadurch gekennzeichnet, dass**
die Steuerungseinrichtung einem bestimmten auslösenden Ereignis ein bestimmtes Aktionsereignis zuordnet

## Claims

1. Method for operating controlled machines, a movement of at least one movable machine element of the machine being controlled by the use of a movement profile (4) which is specific to this movement and describes a movement of the machine element in the normal state, and said movement profile of the movement of the machine element being subdivided into a plurality of profile segments (I, II, III, IV), at least one profile segment (I, II, III, IV) being assigned at least one movement condition which influences said profile segment (I, II, III, IV), and each movement condition comprising at least one triggering event and at least one action event assigned to said triggering event and triggered by the triggering event, the action event influencing the relevant profile segment (I, II, III, IV), **characterized in that** the at least one movement condition is used to carry out jumps from one profile segment of the specific movement profile (4) to another profile segment of the specific movement profile (4), and a jump from said profile segment to the other profile segment is initiated by a jump command, a new movement profile being determined upon said jump command.

2. Method according to Claim 1, **characterized in that** the movement conditions are executed in real time.

3. Method according to at least one of the preceding claims, **characterized in that** a change in a profile segment (I, II, III, IV) is effected by a triggering event.

4. Method according to Claim 3, **characterized in that** the change in the profile segment (I, II, III, IV) is calculated in real time.

5. Method according to at least one of the preceding Claims 3-4, **characterized in that** the calculation of the change in the profile segment is carried out by means of prescribed laws of movement.

6. Method according to at least one of the preceding claims, **characterized in that** the movement profile (4) is founded in at least one basic function.

7. Method according to at least one of the preceding claims, **characterized in that** a triggering criterion is selected from a group of criteria which includes at least a position of the machine element relative to the beginning of a movement step, a position of the machine element relative to the beginning of the movement profile, an input signal from a PLC, an input signal of an external input, an execution period, the result of another condition, or combinations thereof.

8. Method according to at least one of the preceding claims, **characterized in that** a reaction event is selected from a group of events which includes at least a termination of a movement step, an immediate jump to another movement step, a jump to another movement step after completion of the current movement step, the triggering of a PLC output or of an external output, the variation of properties and boundary conditions of the current movement step, or combinations thereof.

9. Control apparatus for operating controlled machines, designed in such a way that a movement of at least one movable machine element of the machine is controlled by the use of a movement profile (4) which is specific to this movement and describes a movement of the machine element in the normal state, and that said movement profile is subdivided into a plurality of profile segments (I, II, III, IV), a control device being provided the effect of which is that at least one of the profile segments (I, II, III, IV) is assigned at least one movement condition which influences said profile segment (I, II, III, IV), each movement condition comprising at least one triggering event and at least one action event assigned to said triggering event and triggered by the triggering event, the action event influencing the profile segment, **characterized in that** the at least one movement condition can be used to carry out jumps from one profile segment of the specific movement profile (4) to another profile segment of the specific movement profile (4), and a jump from said profile segment to the other profile segment is initiated by a jump command, a new movement profile being determined upon said jump command.

10. Control apparatus according to Claim 9, **characterized in that** the control apparatus has a verification device which verifies whether a specific triggering event has occurred.

11. Control apparatus according to at least one of the preceding Claims 9-10, **characterized in that** the control device assigns a specific action event to a specific triggering event.

## Revendications

1. Procédé destiné au fonctionnement de machines commandées, un mouvement d'au moins un élément de machine mobile de la machine étant commandé en utilisant un profil de mouvement (4) spécifique à ce mouvement décrivant un mouvement de l'élément de machine dans l'état normal et ce profil de mouvement du mouvement de l'élément de machine étant subdivisé en plusieurs segments de profil (I, II, III, IV) ;
au moins une condition de mouvement étant associée à au moins un segment de profil (I, II, III, IV), ladite condition influençant ce segment de profil (I, II, III, IV) et chaque condition de mouvement comprenant au moins un événement déclencheur et au moins un événement d'action associé à cet événement déclencheur et déclenché par l'événement déclencheur, l'événement d'action influençant le segment de profil (I, II, III, IV) concerné ;
**caractérisé en ce que** des sauts d'un segment de profil du profil de mouvement spécifique (4) à un autre segment de profil du profil de mouvement spécifique (4) sont réalisés à l'aide de l'au moins une condition de mouvement et qu'un saut de ce segment de profil à l'autre segment de profil étant déclenché par un ordre de saut, un nouveau profil de mouvement étant déterminé à réception de cet ordre de saut.

2. Procédé selon la revendication 1, **caractérisé en ce que** les conditions de mouvement se déroulent en temps réel.

3. Procédé selon au moins l'une quelconque des revendications précédentes, **caractérisé en ce qu'**une modification d'un segment de profil (I, II, III, IV) est provoquée par un événement déclencheur.

4. Procédé selon la revendication 3, **caractérisé en ce que** la modification du segment de profil (I, II, III, IV) est calculée en temps réel.

5. Procédé selon au moins l'une quelconque des revendications 3 à 4, **caractérisé en ce que** le calcul de la modification du segment de profil est effectué à l'aide de lois de mouvement prédéfinies.

6. Procédé selon au moins l'une quelconque des revendications précédentes, **caractérisé en ce qu'**au moins une fonction de base sous-tend le profil de mouvement (4).

7. Procédé selon au moins l'une quelconque des revendications précédentes, **caractérisé en ce qu'**un critère déclenchant est sélectionné dans un groupe de critères contenant au moins une position de l'élément de machine par rapport au début d'une étape de mouvement, une position de l'élément de machine par rapport au début du profil de mouvement, un signal d'entrée de SPS, un signal d'entrée provenant d'une entrée externe, une durée de réalisation, le résultat d'une autre condition ou une combinaison de ceux-ci.

8. Procédé selon au moins l'une quelconque des revendications précédentes, **caractérisé en ce qu'**un événement de réaction est choisi à partir du groupe d'événements contenant au moins une interruption d'une étape de mouvement, un saut immédiat à une autre étape de mouvement, un saut à une autre étape de mouvement à la fin de l'étape de mouvement actuelle, le déclenchement par une sortie SPS ou par une sortie externe, la modification des propriétés et conditions de bord de l'étape de mouvement actuel ou des combinaisons de ceux-ci.

9. Dispositif de commande destiné au fonctionnement de machines commandées et conçu de telle sorte qu'un mouvement d'au moins un élément de machine mobile de la machine est commandé en utilisant un profil de mouvement (4) spécifique à ce mouvement décrivant un mouvement de l'élément de machine dans l'état normal et que ce profil de mouvement est subdivisé en plusieurs segments de profil (I, II, III, IV) ;
un dispositif de commande étant prévu qui agit de telle sorte qu'au moins une condition de mouvement est associée à au moins un des segments de profil (I, II, III, IV), ladite condition influençant ce segment de profil (I, II, III, IV), chaque condition de mouvement comprenant au moins un événement déclencheur et au moins un événement d'action associé à cet événement déclencheur et déclenché par l'événement déclencheur, l'événement d'action influençant le segment de profil ; **caractérisé en ce que** des sauts d'un segment de profil du profil de mouvement spécifique (4) à un autre segment de profil du profil de mouvement spécifique (4) peuvent être réalisés à l'aide de l'au moins une condition de mouvement et qu'un saut de ce segment de profil à l'autre segment de profil étant déclenché par un ordre de saut, un nouveau profil de mouvement étant déterminé à réception de cet ordre de saut.

10. Dispositif de commande selon la revendication 9, **caractérisé en ce que** le dispositif de commande comporte un dispositif de vérification qui vérifie si un événement déclencheur défini est survenu.

11. Dispositif de commande selon au moins l'une quelconque des revendications 9 à 10, **caractérisé en ce que** le dispositif de commande affecte à un événement déclencheur défini un événement d'action défini.
